Europäisches Patentamt

European Patent Office

Office européen des brevets

(11) Publication number: **0 651 377 A1**

# EUROPEAN PATENT APPLICATION

(21) Application number: **94108950.0**

(22) Date of filing: **10.06.94**

(51) Int. Cl.⁶: **G11B 5/55**

(30) Priority: **27.10.93 US 144066**

(43) Date of publication of application:
**03.05.95 Bulletin 95/18**

(84) Designated Contracting States:
**DE FR GB IE IT**

(71) Applicant: **Hewlett-Packard Company**
**3000 Hanover Street**
**Palo Alto,**
**California 94304 (US)**

(72) Inventor: **Marshall, Daniel R.**

3130 Victory View Drive
Boise,
Idaho 83709 (US)
Inventor: **Hay, Robert R.**
5650 Fieldcrest Drive
Boise,
Idaho 83704 (US)

(74) Representative: **Schoppe, Fritz, Dipl.-Ing.**
**Patentanwalt,**
**Georg-Kalb-Strasse 9**
**D-82049 Pullach (DE)**

(54) Position sensors for computer disk drives.

(57) A disk drive (10) has a stationary frame and at least one storage disk (14) rotatably connected to the frame. An actuator arm (26) is operably connected to the frame to move relative to the storage disk (14) and radially position a read/write head across the storage disk (14). The disk drive (10) further includes a position sensor (50) for detecting absolute radial position of the actuator arm (26) across the storage disk (14) and outputting an arm position signal indicative of the absolute radial position of the actuator arm (26). The position sensor (50) is an optical sensor in its preferred form having a light source (52) mounted on the actuator arm (26) and a photosensor (54) attached to the stationary frame. The disk drive can also be equipped with a displacement sensor (60) for detecting lateral movement of the rotating storage disk (14) and outputting a disk displacement signal indicative of the disk lateral movement. When both sensors are employed, a processor or other control circuitry (70) can determine repeatable and non-repeatable runout characteristics of the rotating storage disk (14) based upon the arm position signal and the disk displacement signal.

Fig. 1

## TECHNICAL FIELD

This invention relates to computer disk drives.

## BACKGROUND OF THE INVENTION

Computer hard disk drives can be generally classified into two categories: dedicated servo disk drives and embedded servo disk drives. Dedicated servo disk drives have one or more magnetic disks wherein one entire surface of a disk is dedicated to storing servo information that is useful in controlling and synchronizing the operation of the magnetic disk and read/write head. In contrast, embedded servo disk drives have one or more magnetic disks wherein each disk has thin "pie-shaped" slices reserved for servo information interspersed between larger "pie-shaped" regions for data storage.

Conventional disk drives employ a closed loop servo control system which depends on position information read from the disk surface(s). In order to accurately read the required position information, a high precision timing system must be created. The timing system must be capable of both acquiring a synchronous operating state with the spinning disk(s) and maintaining that mode of operation indefinitely. The timing system supplies critical timing and status of both the servo system and the read/write system. The servo information used by the timing system has been supplied almost exclusively by information provided on an entire disk surface (dedicated disk drive) or interspersed about the disks in servo gap regions (embedded disk drives).

Although the proportion of space available for data to the space reserved for servo information has gradually increased, the servo information still occupies a significant percentage of available disk space. Current disk drives use 10%-20% of the total storage area for tracking information. Ideally, a designer would like to make the entire disk space available for data storage, but this is unattainable under present disk drive architectures because servo control is effectuated through reading the servo information placed on the disks. Accordingly, it would be desirable to develop a disk drive that did not require any disk-located tracking information or at least substantially reduced the amount of tracking information below current levels.

Embedded servo disk drives have an added drawback in that the servo information is provided on a sampled basis and only during read operations. This characteristic is inherent in the drive design because the servo information is constrained to the "pie-shaped" regions spaced about the disk. The dedicated disk drive overcomes this drawback in that its dedicated surface provides continuous servo information. Unfortunately, the entire disk surface in the dedicated drive is then no longer available for data recording.

A separate problem associated with disk drives concerns manufacturing. External servowriters are used to write the servo information on the dedicated disk or within the embedded servo sectors of a disk. A drawback to this process is that the servowriters are expensive and require considerable time to initialize a disk drive. Furthermore, once the disk is formatted, it is difficult to reconfigure the disk at a later time. It would be advantageous to design a disk drive which could be self-initialized and reconfigured without reliance on servowriters. Such a design would reduce manufacturing time and lower costs.

Another unrelated problem associated with conventional disk drives arises when the disk drive is subjected to shock or vibration, causing the actuator arm assembly to suddenly change position relative to the disk. Conventional drives employ accelerometers to detect this sudden positional change and to reposition the head/arm assembly above the desired concentric track. However, accelerometers are costly. They can also be unreliable in that they measure positional change from a location removed from the actual interface area between the read/write head and the storage disk. Additionally, accelerometers measure acceleration changes in the arm rather than absolute arm position.

Another problem associated with disk drives relates to lateral wobbling of the rotating disks. The problem, referred to as "runout", is caused when the circular storage disks are slightly decentered from their optimal axis of rotation, allowing the disks to move laterally in a back and forth pattern. There are two kinds of runout: repeatable runout and non-repeatable runout. In repeatable runout, the lateral motion of the rotating disk is identifiable and predictable. In non-repeatable runout, the lateral motion is random and not predictable, even though it may actually repeat over an unobservably large number of rotations. Conventional disk drives are ineffective of measuring, isolating, and compensating for non-repeatable runout errors during servowriting.

This invention relates to a disk drive which overcomes the above drawbacks. The disk drive of this invention significantly reduces the amount of disk storage space used for servo information; has the ability to isolate, measure, and adjust for runout errors including during servowriting; can be initialized or reconfigured without use of an external servowriter; and eliminates the need for an accelerometer. The unique disk drive is less expensive to manufacture, while improving servo control.

In a preferred embodiment, this invention achieves these objectives through the use of optical sensors. A disk drive marketed under the trademark ProDrive Series™ by Quantum Corporation, a company located in Milpitas, California, uses an optical rotary encoder of the type described in U.S. Patent No. 4,625,109, assigned to Quantum. A second patent, U.S. Patent No. 4,814,909, also assigned to Quantum, describes a disk drive incorporating such an optical rotary encoder. The optical rotary encoder has a fixed light source, a fixed array of photodiodes, and a movable scale that passes between the stationary light source and photodiodes to interrupt the emitted light. Microlines are formed on the scale to alternately block and pass the emitted light as the scale rotates. The optical rotary encoder is mounted beside the disk array and within the head/arm assembly along a shaft supporting the multiple actuator arms. As the actuator arms traverse the disk, the rotary encoder counts the interruptions caused by the microlines, with each microline and adjacent space representing a set number of data tracks on the disk. More recent disk drives produced by Quantum have not incorporated the optical rotary encoders.

## DISCLOSURE OF THE INVENTION

According to one aspect of this invention, a disk drive has at least one storage disk rotatably connected to a frame to spin about an axis of rotation. An actuator arm is operably connected to the frame to move relative to the storage disk and radially position a read/write head across the storage disk. The disk drive has a position sensor for detecting absolute radial position of the actuator arm across the storage disk and a displacement sensor for detecting lateral movement of the rotating storage disk.

According to another aspect, the position sensor is an optical sensor having a light source mounted on the actuator arm and a light sensitive detector mounted to the frame to sense the light emitted by the source. The optical position sensor outputs an arm position signal indicative of the absolute radial position of the actuator arm. The displacement sensor is an optical sensor positioned adjacent to a peripheral edge of the storage disk or at the disk hub and oriented to detect lateral shifting of the storage disk edge. The displacement sensor outputs a disk displacement signal indicative of the disk lateral movement corresponding to the radial direction of motion of the actuator arm.

According to yet another aspect, the disk drive includes a processor for determining and compensating for repeatable and non-repeatable runout of the rotating storage disk based upon the arm position signal and the disk displacement signal.

## DESCRIPTION OF THE DRAWINGS

Preferred embodiments of the invention are described below with reference to the following accompanying drawings depicting examples embodying the best mode for practicing the invention.

Fig. 1 is a diagrammatical perspective view of a computer disk drive of this invention. Fig. 1 illustrates a position sensor and a displacement sensor configured according to a first embodiment of this invention.

Fig. 2 is a block diagram of a control system to compensate for repeatable and non-repeatable runout.

Fig. 3 is a diagrammatical side view showing a displacement sensor according to a second embodiment.

Fig. 4 is a diagrammatical side view showing a displacement sensor according to a third embodiment.

Fig. 5 is a diagrammatical side view showing an alternative configuration for a combined position sensor and displacement sensor which employs a common photodetector.

## DETAILED DESCRIPTION OF THE PREFERRED EMBODIMENTS

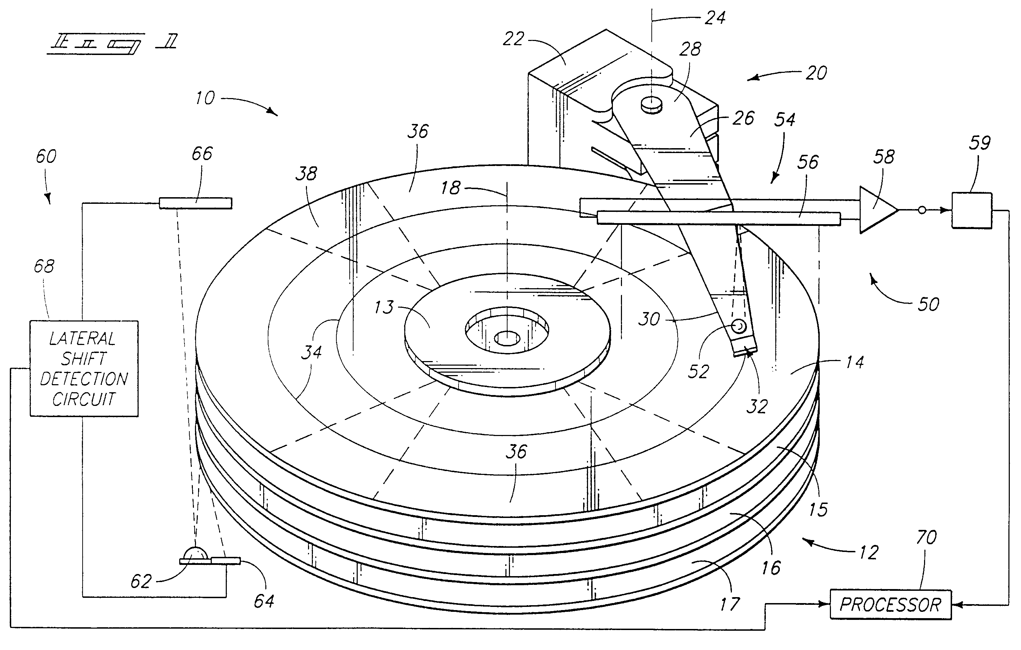

Fig. 1 shows a disk drive 10 having a stacked array 12 of multiple magnetic disks 14-17 aligned along a central axis of rotation 18. The magnetic disks 14-17 have associated, centrally located hubs (referenced generally by numeral 13) and are separated from one another by interlying spacers. The magnetic disks 14-17 are rotatably connected to a stationary frame via a spindle assembly and powered by a motor or other drive mechanism (not shown) to spin about axis 18 at a substantially constant speed. The spindle assembly and portion of frame supporting the disk array is of conventional design and thus is not shown in the figures nor described herein.

A head/arm assembly 20 is positioned adjacent to the stacked disk array 12. The head/arm assembly 20 includes a fixed frame member 22 and multiple actuator arms which are controllably pivoted about an axis 24 relative to frame 22. Only one actuator arm 26 is shown in Fig. 1, but other actuator arms are aligned beneath arm 26 such that one or two arms are provided for each magnetic disk 14-17. The rotary actuator arms are thereby movable relative to storage disks 14-17.

Actuator arm 26 has a proximal end 28 operatively coupled to frame 22 and a distal end 30 suspended above upper disk 14. Actuator arm 26 is typically a two-part construction of an arm portion which defines proximal end 28 and a suspension member that is spot welded to the arm portion to define the distal end 30. A head gimbal assembly 32 is mounted at distal end 30. The head gimbal assembly includes a slider physically connected via a gimbal mount to actuator arm 26 and a magnetic read/write head installed on the slider. The read/write head magnetically transfers information to and from storage disk 14. According to this arrangement, actuator arm 26 supports and radially positions the read/write head across disk 14 as actuator arm 26 is controllably rotated about axis 24.

Individual magnetic disks have many concentric tracks 34 for storing data and servo information. The tracks 34 are preferably divided into numerous circumferentially spaced regions or sectors (as represented by the pie-shaped dashed lines) similar to those of conventional embedded servo disk drives. The regions or sectors of disk 14 can be generally classified as data segments 36 and "inter-sector" servo gaps 38. Data segments 36 are relatively large pie-shaped wedges which store recorded bits of data within tracks 34. Servo gaps 38 are relatively small pie-shaped regions interspersed between data segments 36 for storing some tracking information within tracks 34.

Unlike conventional embedded servo disk drives, however, disk drive 10 can be operated without such embedded tracking information as will be explained in more detail in the continuing discussion. The servo gaps 38 are used in the preferred embodiment for complementary, low sampling rate, on-disk information which can be employed to compensate for thermal or mechanical shifts among the disks and head/arm assembly 20. Because the information derived from the servo gaps 38 is no longer required for direct tracking control, the servo gaps 38 are fewer in number and considerably smaller in comparison to those found on common embedded servo disk drives. As a result, the amount of space available for data storage on disk drive 10 is substantially increased in comparison to prior art disk drives.

Disk drive 10 has a position sensor 50 for detecting absolute radial position of the actuator arm 26 relative to the storage disk 14. Position sensor 50 is preferably an optical sensor having a first sensor component in the form of a light source 52 attached to distal end 30 of actuator arm 26. Position sensor 50 also includes a complementary second sensor component in the form of a photosensor or light sensitive detector 54 mounted to the frame in close proximity to light source 52.

The light source 52 and detector 54 operatively interact to generate a signal indicative of the radial position of the actuator arm 26 as it moves across the storage disk 14. More particularly, light source 52 emits a light beam which moves with actuator arm 26 along disk 14 while detector 54 senses the light beam to distinguish the arm movement. The light source 52 may include a lens, aperture, or other beam shaping means for focusing the light beam onto the photodetector 54. Light detector 54 is highly sensitive and can discern a very large number of incremental position changes in the arm. While other sensors can be used, the optical position sensor 50 is most preferred because it has very low susceptibility to electrical noise and because it does not introduce any electrical noise or magnetic field generating components near the sensitive read/write head and disk surface.

The two sensor components may be reversed, with the photodetector 54 mounted to the actuator arm 26 and the light source attached to the stationary frame. However, the former configuration is more preferred because fewer conductive leads are required to interface the light source on the tip of the actuator arm and because the light source is small, making it conducive to miniaturization for purposes of reducing the overall weight of the moving arm. Furthermore, the sensing element is attached to the frame away from the electrically noisy environment surrounding the read/write head.

The optical position sensor 50 of this invention affords several advantages. First, the optical position sensor enables the disk drive to measure absolute radial position of the actuator arm. The photodetector 54 is attached to the stationary frame and extends across the entire radial dimension of the disk surface to provide a fixed reference scale. The light source moves relative to this fixed scale as the actuator arm swings over the disk. Tracking information can therefore be optically generated through this external sensor, as opposed to relying on servo information embedded on one or more disk surfaces. A related benefit is improved data seeking capabilities stemming from the drive's ability to measure absolute radial position of the actuator arm without having to count from mark to mark as in prior art drives.

The position sensor 50 is considerably different from the optical rotary encoder used in the prior art drives manufactured by Quantum Corporation (discussed in the Background of the Invention). The Quantum drive is incapable of globally measuring absolute radial position because the side mounted optical rotary encoder is used to count local light interruptions (which approximate data tracks) caused by rotating the screen between the fixed light source and photodetector as the arm moves. The rotary encoder does not directly monitor the absolute arm position.

A second advantage of this invention is that very little disk area, if any, is used for tracking information (as compared to 10%-20% of the total storage area in prior art disk drives). This frees up a significant amount of storage space which can be used to record data. A third advantage is that optical position sensor 50 provides continuous position information. This is particularly advantageous over embedded servo disk drives which receive their tracking information only periodically as the disk rotates through the spaced servo gap regions.

A fourth advantage is that disk drive 10 is better able to handle catastrophic events caused by shock or severe vibrations. Position sensor 50 is on-line at all times and possesses sufficient response speed to sense shock-induced off-track errors. It can quickly terminate the current operation (for example, a writing operation to avoid erasure of data in adjacent tracks) and determine the absolute post-shock position of the actuator arm 26 relative to the storage disk 14. The position sensor-equipped disk drive 10 can then efficiently return the arm to its desired pre-shock position.

A fifth advantage is that the disk drive 10 can accomplish the above tasks without use of an accelerometer. Due to the continuous on-line control offered by the optical position sensor, accelerometers are unnecessary in the disk drive of this invention. Thus, a significantly expensive component is eliminated, thereby reducing the total product cost.

A sixth advantage is that disk drive 10 eliminates the use of the costly external servowriter. This improvement lowers manufacturing time and expense, making it easier to expand the production quantity of these disk drives. A related benefit is that the drive 10 can re-servowrite itself at any time, even after complete assembly, permitting the disk drive to be adaptable to different applications. For example, different track spacings can be selected after assembly to match desired applications imposed by various users.

According to the preferred embodiment, light source 52 is a very bright DC optical source, such as a light emitting diode (LED), with a built-in lens or other beam shaping means for focusing the emitted light beam. Other less preferred light sources include diode lasers, super luminescent diodes, and an optical fiber source. LED 52 is positioned at the distal end 30 of actuator arm 26 and oriented to emit light in an upward direction away from the arm and disk. The light source 52 may be positioned at other locations along the actuator arm 26, but a position near the distal end 30 is most preferred because it undergoes maximum displacement as the arm is pivoted. This permits a larger range of motion which can be segmented into many optically and electronically distinguishable incremental steps.

Light sensitive detector 54 includes an analog position sensor in the form of lateral effect photodiode 56 which is oriented to overlie LED 52. Divided sensors may be used provided that they have sufficiently many segments for adequate resolution. Preferably, photodiode 56 is linear and aligned along a radial path relative to disk rotation axis 18 to overlie an entire radial portion of disk 14. As an alternative, photodiode 56 can be arcuate shaped to conform generally to the sweeping arcuate path of the LED 52. Light sensitive detector 54 further includes a differential amplifier 58 electrically coupled to photodiode 56 and if desired, an analog-to-digital convertor 59.

Photodetector 54 preferably has a large range/bandwidth product capable of discerning a very large number of resolvable increments. As an example, photodetector 54 has a bandwidth of at least approximately 500 Hz in combination with a resolution of at least approximately 1.8 million resolvable increments. As a more specific example, photodetector 54 preferably has a bandwidth of approximately 5 kHz in combination with a resolution of approximately 600,000 resolvable increments.

Lateral effect photodiode 56 is selected due to its high signal-to-noise ratio. With a sufficiently bright source, the limiting noise in the light sensitive detector 50 is the shot noise resulting from the detection process in the photodiode 56. Shot noise is defined by the following relationship:

$$I_N = \sqrt{2q\Delta fPR}$$

where $I_N$ is shot noise, q represents the charge on an electron or $1.6 \times 10^{-19}$ Coulomb, $\Delta f$ is bandwidth, P is optical power, and R represents responsivity of the material (a constant). Example values of the preferred embodiment include a bandwidth $\Delta f$ of 5 kHz, an optical power P of 1.0 mW, and a responsivity R of 0.5 A/W. Inserting these values into the above equation yields the following value for shot noise:

$$I_N = 8.9 \times 10^{-10} \text{ A.}$$

The maximum signal $I_S$ is defined as the product of optical power P and material responsivity R (i.e., $I_S = PR$). For the above parameters, the maximum signal $I_S$ equals $2 \times 0.5 \times 10^{-3}$ A, where the factor of two results from the bilateral nature of the range of the signal. Accordingly, the limiting signal-to-noise ratio in a 5 kHz bandwidth for the light sensitive detector 50 is:

$$I_S/I_N = 9.6 \times 10^5.$$

This signal-to-noise ratio corresponds at the individual track level to a ratio of approximately 1/300th track for a disk drive having 3000 tracks. Shot noise limited performance can be realized because compact, high output, low noise, low cost, and reliable optical sensors are commercially available.

Returning to Fig. 1, disk drive 10 further includes a displacement sensor 60 for detecting lateral movement of the rotating disk array 12. Displacement sensor 60 is positioned at the side of disk array 12 to observe the lateral wobble. The sensor is diagrammatically illustrated as spanning the entire disk array, although in actual implementation a displacement sensor can be provided for one or more of the storage disks 14-17. Displacement sensor 60 may also be located at the hub 13 of disk array 12 for reasons of compactness.

Displacement sensor 60 is preferably an analog optical sensor having a light source 62 (such as an LED) for emitting a light beam and one or more light sensitive detectors 64, 66 (such as photodiodes) for collecting the emitted light. The light source 62 and detectors 64, 66 are electrically coupled to a lateral shift detection circuit 68 which processes the analog signals received from the detectors, and if desired, converts them into digital signals.

In the embodiment of Fig. 1, light source 62 is aimed at the peripheral edge of disk array 12. First light sensitive detector 64 is positioned on the same side of disk array 12 as LED 62 to gather a portion of the emitted light that is reflected by the storage disks. Second light sensitive detector 66 is positioned on the opposite side of disk array 12 to collect a portion of the emitted light that bypasses the disks. The light received by respective first and second photodetectors 64, 66 varies in relation to the lateral motion of the disks therebetween. That is, as the disks shift leftward (relative to the figure) proportionally more light is reflected and collected by photodetector 64 as compared to light received by photodetector 66; whereas, as the disks shift rightward, proportionally less light is reflected and more light is passed to photodetector 66. Lateral shift detection circuit 68 determines the lateral movement of the rotating storage disks based upon the portions of light sensed by photodetectors 64, 66.

The ability to separately measure arm motion using position sensor 50 and lateral disk motion using displacement sensor 60 permits the disk drive of this invention to isolate repeatable and non-repeatable runout contributions. For illustration purposes, the two separate sensors 50 and 60 are shown electrically coupled to a processor 70 (such as a microprocessor, microcomputer, or other control circuitry). Processor 70 is programmed or configured to determine repeatable and non-repeatable runout of the rotating disks based upon the signals generated by the two sensors 50 and 60.

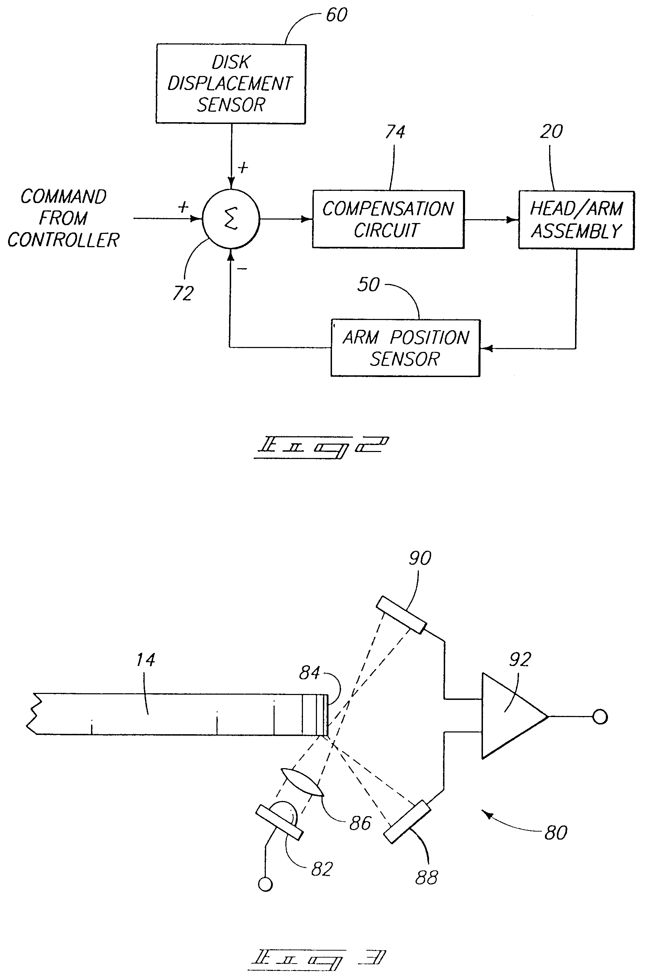

There are several different techniques for combining the information from these two sensors to compensate for the combined effects of repeatable and non-repeatable runout. Preferably, runout (repeatable or non-repeatable) is computed by algebraically or electronically subtracting the disk displacement signal output by sensor 60 from the arm position signal output by sensor 50. This subtraction method is illustrated in more detail below with reference to Fig. 2. An alternative technique effective for controlling repeatable runout is to have processor 70 monitor the disk displacement signal for purposes of observing repeatability in the signal over time. Once this repeatability characteristic is identified, the processor 70 then adjusts the operation of disk drive 10 to compensate for the repeatable runout error.

Fig. 2 illustrates a block diagram of a circuit configuration capable of making real-time adjustments in disk drive 10 to compensate for runout errors. The disk displacement signal from sensor 60 and the ideal command signal from a disk drive controller are coupled to non-inverting inputs of summing circuit 72. The arm position signal from sensor 50 is coupled to an inverting input of summing circuit 72. Circuit 72 electronically sums these signals and outputs to compensation circuit 74 a result that accounts for any error induced by repeatable and non-repeatable runout. Compensation circuit 74 is a conventional servo loop circuit that compensates for mechanical induced variations inherent in disk drives. Its output is used by head/arm assembly 20 to position the actuator arm 26 over the desired track 34 on storage disk 14. Arm position sensor 50 monitors the actual movement of actuator arm 26 and then provides feedback to facilitate accurate positional control of the arm.

The two optical sensors 50 and 60 facilitate complete servo control of disk drive 10 without the use of information embedded in the disk. As noted above, however, some servo information can be stored on the disk to help correct for thermal or mechanical drift resulting from product wear and other factors. As a result, the disk drive of this invention achieves the benefits of both embedded and dedicated servo disk drives, without the accompanying drawbacks.

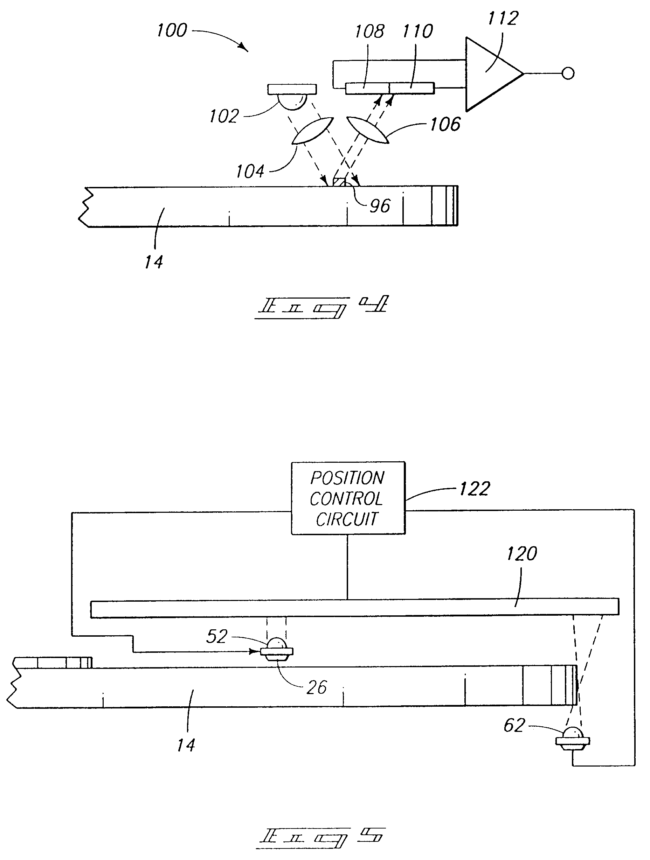

Fig. 3 illustrates a disk displacement sensor 80 according to a second embodiment of this invention. Disk displacement sensor 80 is an optical sensor having a light source 82 angled to omit a light beam toward an edge 84 of storage disk 14. A converging lens 86 is positioned adjacent to light source 82 to focus the emitted light beam at edge 84. Displacement sensor 80 further includes a first light sensitive detector 88 positioned to receive a portion of light reflected by disk 14 and a second light sensitive detector 90 located to receive a portion of light that bypasses disk edge 84. The analog signals generated by photodetectors 88 and 90 are input to a differential amplifier 92 which outputs a disk displacement signal that varies in relation to the portions of light received by the photodetectors.

Fig. 4 shows a displacement sensor 100 according to a third embodiment of this invention. For this embodiment, an annular reflective strip 96 is applied near the edge of disk 14 (although the strip can alternatively be located near or on the disk hub 13). Sensor 100 consists of light source 102 for emitting a light beam, an incident lens 104 for directing the beam onto reflective strip 96, lens 106 for focusing the beam reflected from strip 96 onto a pair of side-by-side photodetectors 108 and 110, and a differential amplifier 112. As the disk drifts laterally back and forth, the reflected beam proportionally migrates back and forth across the detector pair such that the ratio of the amounts of light received by each individual detector is related to lateral disk movement. A lateral effect photodiode sensor may also be used.

Fig. 5. shows an alternative arrangement for configuring the arm position sensor and the disk displacement sensor which employs a common photodetector 120. Photodetector 120 extends over disk 14 and beyond its peripheral edge. Photodetector 120 is aligned to overlie within effective light receiving proximity the first light source 52 attached to actuator arm 26 and the second light source 62 disposed on the opposite side of disk 14. In this manner, first light source 52 and photodetector 120 combine to define the arm position sensor for generating a signal indicative of the absolute radial position of actuator arm 26. Second light source 62 and common photodetector 120 combine to form the disk displacement sensor for generating a signal indicative of the lateral movement of the rotating storage disk. A multiplexing position control circuit 122 is coupled to common photodetector 120 to decipher and separate the analog information into intelligible signals representative of arm position and disk displacement.

In addition to the advantages mentioned above, disk drive 10 of this invention offers the following additional advantages. Apart from adding the two sensors, very few changes are required to modify existing disk drive components. The read/write head and storage disks remain unchanged. The spindle and head/arm actuator assemblies-are essentially unaltered. The added sensors are also relatively inexpensive, and with the elimination of accelerometers, the overall cost of the disk drive is reduced. Another advantage is that the sensor system is easily adaptable to different sizes of disk drives and track pitches. Moreover, defects in the disks will not affect operation of the tracking system.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A disk drive comprising:
   a stationary frame;
   at least one storage disk (14) rotatably connected to the frame to spin about an axis of rotation (18);
   at least one actuator arm (26) operably connected to the frame to move relative to the storage disk (14) and radially position a read/write head across the storage disk (14); and
   a position sensor (50) for detecting radial position of the actuator arm (26) across the storage disk (14), the position sensor having a first sensor component (52) mounted on the actuator arm (26) and a second sensor (54) component mounted to the frame, the first and second sensor components operatively interacting to generate a signal indicative of the radial position of the actuator arm (26) as the actuator arm (26) is moved across the storage disk (14).

2. A disk drive according to claim 1 wherein the position sensor (50) is an optical sensor, the optical position sensor comprising:
   a light source (52) mounted on the actuator arm (26); and
   a light sensitive detector (54) mounted to the frame, the detector being responsive to light emitted from the light source (52) to generate a signal indicative of the radial position of the actuator arm (26).

3. A disk drive according to claim 2 wherein the position sensitive (54) detector is linear shaped and aligned radially relative to the axis of rotation to overlie a portion of the storage disk (14).

4. A disk drive according to claim 2 wherein the position sensitive detector (54) is arcuate shaped and positioned to overlie a portion of the storage disk (14).

**5.** A disk drive according to claim 1 wherein the position sensor (50) is an analog position sensor having a bandwidth of at least approximately 500 Hz and a resolution of at least approximately 1.8 million resolvable increments.

**6.** A disk drive comprising:

a stationary frame;

at least one storage disk (14) rotatably connected to the frame to spin about an axis of rotation (18);

at least one actuator arm (26) operably connected to the frame to move relative to the storage disk (14) and radially position a read/write head across the storage disk (14);

a position sensor (50) for detecting absolute radial position of the actuator arm (26) across the storage disk (14); and

a displacement sensor (60) for detecting lateral movement of the rotating storage disk (14).

**7.** A disk drive comprising:

a stationary frame;

at least one storage (14) disk rotatably connected to the frame to spin about an axis of rotation (18);

at least one actuator arm (26) operably connected to the frame to move relative to the storage disk (14) and radially position a read/write head across the storage disk (14);

a position sensor (50) for detecting absolute radial position of the actuator arm (26) across the storage disk (14), the position sensor (50) outputting an arm position signal indicative of the absolute radial position of the actuator arm (26);

a displacement sensor (60) for detecting lateral movement of the rotating storage disk (14), the displacement sensor (60) outputting a disk displacement signal indicative of the disk lateral movement; and

a processor (70) for determining repeatable and non-repeatable runout characteristics of the rotating storage disk (14) based upon the arm position signal and the disk displacement signal.

**8.** A disk drive according to claim 7 wherein the processor (70) includes means for electronically subtracting the disk displacement signal from the arm position signal.

**9.** A disk drive according to claim 7 wherein the processor (70) includes means for monitoring the disk displacement signal for purposes of observing a repeatability characteristic in the signal over time and for adjusting operation of the disk drive to compensate for the repeatability characteristic.

**10.** A disk drive according to claim 7 wherein the position sensor (50) is an optical sensor, the optical position sensor comprising:

a light source (52) mounted on the actuator arm (26); and

a light sensitive detector (54) mounted to the frame, the detector being responsive to light emitted from the light source (52) to generate the arm position signal.

FIG. II

LATERAL SHIFT DETECTION CIRCUIT

PROCESSOR

EP 0 651 377 A1

*Fig 2*

*Fig 3*

Fig 4

POSITION CONTROL CIRCUIT

Fig 5

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 150 306 (IBM CORP.)<br>* page 1 - page 4; figure 4 *<br>* page 13 - page 14 * | 1,6-9 | G11B5/55 |
| X | US-A-4 426 694 (KIMURA)<br>* the whole document * | 1-3 | |
| X | EP-A-0 484 907 (BRIER TECHNOLOGY)<br>* abstract * | 1 | |
| X | EP-A-0 260 420 (IBM CORP.)<br>* abstract * | 1 | |
| X | IBM TECHNICAL DISCLOSURE BULLETIN,<br>vol.24, no.3, August 1981, NEW YORK US<br>pages 1457 - 1460<br>F. E. AXMEAR ET AL 'MAGNETIC STORAGE MEDIA TRACK-ACCESSING MECHANISM USING STROBED OPTICAL ARRAY FEEDBACK'<br>* the whole document * | 1 | |
| X | PATENT ABSTRACTS OF JAPAN<br>vol. 6, no. 104 (P-122) 15 June 1982<br>& JP-A-57 036 482 (TOSHIBA CORP.) 27 February 1982<br>* abstract * | 1 | **TECHNICAL FIELDS SEARCHED** (Int.Cl.6)<br><br>G11B |
| X | IBM TECHNICAL DISCLOSURE BULLETIN,<br>vol.28, no.1, June 1985, NEW YORK US<br>'OPTICAL METHOD FOR COMPENSATING DISK DIAMETER VARIATIONS IN FLEXIBLE DISK DEVICES' | 6 | |
| A | EP-A-0 259 039 (SONY CORP.)<br>* abstract * | 1-10 | |
| A | EP-A-0 490 206 (TESA S.A.)<br>* abstract * | 1-10 | |

-/--

The present search report has been drawn up for all claims

| Place of search | Date of completion of the search | Examiner |
|---|---|---|
| THE HAGUE | 29 December 1994 | Moyle, J |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 104 941 (QUANTUM CORP.) <br> * abstract * <br><br> ----- | 1-10 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 29 December 1994 | Moyle, J |

EPO FORM 1503 03.82 (P04C01)